Europäisches Patentamt

(19) European Patent Office

Office européen des brevets

(11) Publication number: **0 443 990 A1**

# (12) EUROPEAN PATENT APPLICATION

(21) Application number: **91830050.0**

(51) Int. Cl.⁵: **B60R 1/08**

(22) Date of filing: **15.02.91**

(30) Priority: **23.02.90 IT 3559690 U**

(43) Date of publication of application:
**28.08.91 Bulletin 91/35**

(84) Designated Contracting States:
**AT BE CH DE DK ES FR GB GR IT LI LU NL SE**

(71) Applicant: **Musinu, Giovanni Battista**
**Viale Umberto 26**
**I-07100 Sassari (IT)**

(72) Inventor: **Musinu, Giovanni Battista**
**Viale Umberto 26**
**I-07100 Sassari (IT)**

(74) Representative: **Sarpi, Maurizio**
**Studio FERRARIO Via Collina, 36**
**I-00187 Roma (IT)**

(54) **Driving mirror for motor vehicles, and generally transportation means, with a two-face surface for dual viewing purposes.**

(57)  A rear-view or driving mirror provided with two mirror surfaces (8),(10) disposed at an angle to each other so as to allow, besides the standard rear view, also a downward view. The two mirrors enclosed in a conventional frame (6) can be disposed so as to be separated by a horizontal or vertical boundary line (12).

EP 0 443 990 A1

FIG.1

# DRIVING MIRROR FOR MOTOR VEHICLES, AND GENERALLY TRANSPORTATION MEANS, WITH A TWO-FACE SURFACE FOR DUAL VIEWING PURPOSES

The present invention relates to a rear-view or driving mirror provided with two surfaces which are disposed at a suitable angle to each other so as to permit in the same framing, besides the standard vision of the landscape at the back of the driver, also a downward vision so that the driver is allowed to check the presence of any obstacle like sidewalks, curbs and the like.

Mirrors, that currently are called rear-view mirrors and are installed at the outer sides of a vehicle, are designed to allow the driver to visually check the situation at the back of his vehicle. A number of solutions have been devised to allow the driver to vertically and horizontally adjust the position and the angle of inclination of the mirror so as to shift the vision line to the side lane, thus allowing for instance to check any overtaking car, or downwards to check the situation at the wheel level. It is self evident that such adjustments, even though facilitated by etctrical controls, do not solve the problem of the driver who needs to shift istantaneously the line of vision from one view to the other.

The present invention seeks to solve such problem and to provide a rear-view mirror which, unlike standard mirros, is provided with two surfaces disposed at such an angle to each other as to provide in the same framing the normal side vision and a downward vision.

This expedient allows to keep instantly under check both the traffic condition and the overall dimensions of the vehicle in case of running in restricted areas or through narrow lanes. Driver is then enabled to follow without difficulty any steering of his vehicle whether in reverse motion or alongside curbs, platforms or sidewalks.

The present invention will be described more in detail with reference to the annexed drawing, in which :

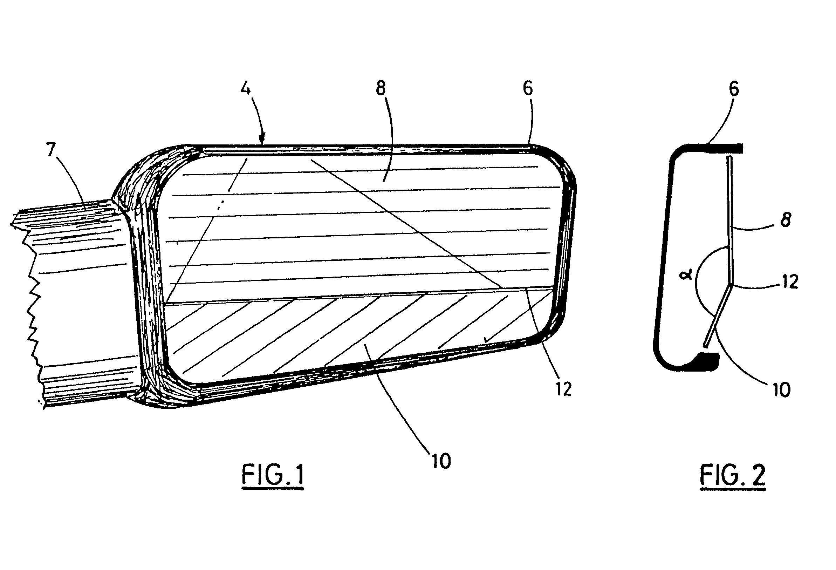

Fig. 1 is a perspective view of the driving mirror according to the invention ;

Fig. 2 is a sectional view of the same driving mirror ;

Figs. 3 and 4 show a perspective and a vertical section views, respectively, of an alternative embodiment of the driving mirrors.

With reference to the drawing the rear-view mirror is generally designated by 4 and is provided with an outer, generally box-like frame 6 which is made of hardened plastic material. Mirror 4 is mounted in its position by a connecting arm 7 which allows the mirror to be oriented in the horizontal plane and is covered with flexible materials. For example a bellows can be used to cover and protect the connecting arm.

The front wall of frame 6 carries a pair of mirrors 8 and 10 which are placed at a certain angle to each other. One mirror has the position of the conventional rear-view mirror and allows to look at the back of the car. The second mirror is oriented downwards and allows to look down at the road.

The boundary line 12 between the two mirrors divides the total surface of the mirror in two parts, one of which corresponding to 70% of the total surface is used as the normal rear-view mirror, the second corresponding to the remaining 30% is used to look downward.

The demarcation of the two surfaces can be provided in two ways : either by means of a single mirror in which the reflecting surface has been suitably inclined or by means of two distinct-mirrors adjacent and inclined to each other. In the latter case both mirrors may be either adjusted by hand or by remote control in order to change independently the angle and the orientation of each mirror.

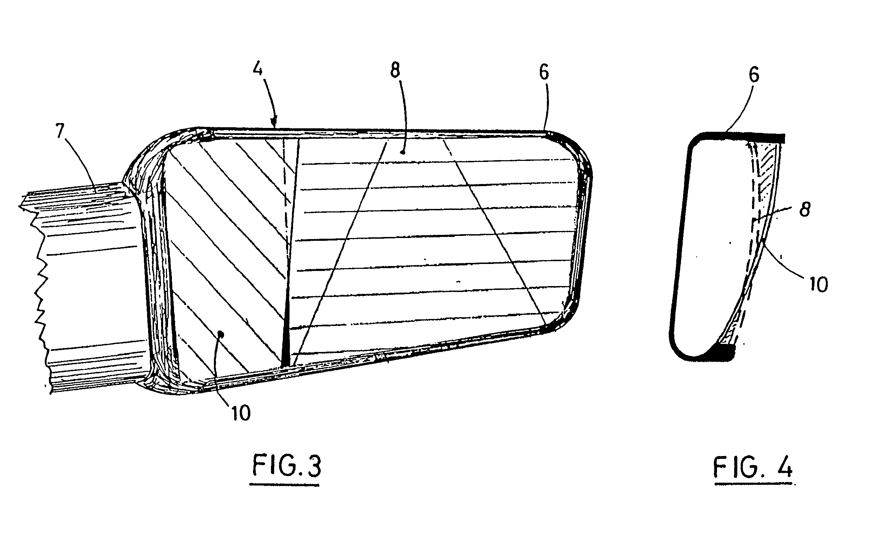

Alternatively, as shown in Figs. 3 and 4, instead of a horizontal demarcation line between the two mirrors, a vertical (either right or left) boundary line can be provided.

It should be appreciated that the present invention can be carried out by only providing a two-face mirror and separate adjusting means for the two mirrors without changing the design of the current mirror frames. It is only requested that the lower frame does not protrude excessively in order not to limit the downward view.

## Claims

1. A driving mirror for motor vehicles, characterized in that it is provided with a two-face surface allowing in the same framing besides the standard view also a downward view.

2. The driving mirror of claim 1, characterized in that the surface of the mirror is formed of two parts disposed at a certain angle to each other and divided by a horizontal boundary line.

3. The driving mirror of the preceding claims, characterized in that said boundary line divides the total surface of the mirror in a proportional manner, the 65-75% of said surface being intended for conventional rear view and 35-25% intended for downward view.

4. The driving mirror of the preceding claims, characterized in that the boundary line is formed in the mirror itself by setting the glass panel at a suitable angle.

5. The driving mirror of the preceding claims, characterized in that the mirror surfaces disposed at an angle to each other belong to two separate mirrors, each one of said mirrors being provided with adjusting means adapted to control the orientation of the respective mirror independently of the other.

6. The driving mirror of the preceding claims, characterized in that the entire mirror is mounted on the outside of the motor vehicle on a horizontally adjustable arm.

7. The driving mirror of claim 2, characterized in that the surface of the mirror is formed of two parts disposed at an angle to each other and divided by a vertical boundary line.

8. A driving mirror substantially as described and illustrated in the annexed drawing.

EP 0 443 990 A1

FIG.2

FIG.1

FIG. 4

FIG.3

European Patent
Office

**EUROPEAN SEARCH REPORT**

Application Number

| | DOCUMENTS CONSIDERED TO BE RELEVANT | | EP 91830050.0 |
|---|---|---|---|
| **Category** | Citation of document with indication, where appropriate, of relevant passages | Relevant to claim | CLASSIFICATION OF THE APPLICATION (Int. Cl.5) |
| X | DE - A1 - 3 302 735 (SCHULZE) * Totality * | 1,2,3, 5,6 | B 60 R 1/08 |
| Y | -- | 8 | |
| X | DE - A1 - 3 806 579 (KRÄMER) * Totality * -- | 1,2,5 | |
| X | FR - A1 - 2 573 374 (TRABOUILLET) * Fig. * -- | 1,2,7 | |
| X | FR - A1 - 2 628 042 (RACLE) * Fig. * -- | 1,7 | |
| X | GB - A - 2 151 568 (STUART) * Fig. * | 1,7 | |
| Y | ---- | 8 | TECHNICAL FIELDS SEARCHED (Int. Cl.5) |
| | | | B 60 R |

The present search report has been drawn up for all claims

| Place of search | Date of completion of the search | Examiner |
|---|---|---|
| VIENNA | 30-04-1991 | PANGRATZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)